# FASCICULE DE BREVET EUROPEEN

(11) **EP 3 973 170 B1**
(45) Date de publication et mention de la délivrance du brevet: **12.07.2023**
(21) Numéro de dépôt: 20737259.0
(22) Date de dépôt: 20.05.2020
(51) Int. Cl.: F02K 9/48

(54) **SYSTÈME DE VAPORISATION AMÉLIORÉ POUR UN LANCEUR SPATIAL**
VERBESSERTES VERDAMPFUNGSSYSTEM FÜR EINE TRÄGERRAKETE
IMPROVED VAPORIZATION SYSTEM FOR A SPACE LAUNCHER

(30) Priorité: 23.05.2019 FR 1905433
(43) Date de publication de la demande: 30.03.2022
(73) Titulaire: ArianeGroup SAS, 78130 Les Mureaux (FR)
(72) Inventeur: DURI, Davide, 27207 VERNON CEDEX (FR); BRANDELY, Anaïs, 27207 VERNON CEDEX (FR); PENIN, Loïc, 27207 VERNON CEDEX (FR)
(74) Mandataire: Cabinet Beau de Loménie
(86) Numéro de dépôt international: PCT/FR2020/050842
(87) Numéro de publication internationale: WO 2020/234545

(56) Documents cités:
- RU-C2- 2 197 628
- US-A- 2 551 115
- US-B2- 8 033 095

## Description

### Domaine Technique

Le présent exposé concerne l'architecture de pressurisation autogène d'un étage de lanceur spatial, et plus précisément les éléments assurant la vaporisation d'un ergol en vue de la pressurisation de réservoirs.

### Technique antérieure

Dans le cadre d'une simplification de l'architecture des étages de lanceurs spatiaux, on cherche à améliorer le système de pressurisation autogène. Un système de pressurisation autogène vise à vaporiser un ergol embarqué sur le lanceur afin d'assurer une pressurisation des réservoirs du lanceur, au lieu d'employer des gaz neutres dédiés. Un tel système est ainsi avantageux en ce qu'il permet de s'affranchir des systèmes de stockage et des circuits auxiliaires pour la circulation de tels gaz neutres. Le document RU 2197628 divulgue un système de pressurisation de l'art antérieur.

La vaporisation de l'ergol est cependant problématique ; on vise en effet à insérer un échangeur thermique au niveau de la tuyère d'échappement des gaz de combustion alimentant les turbopompes du moteur du lanceur afin de capter de la chaleur, mais la circulation des gaz dans cette région rend une telle intégration complexe, notamment au vu des contraintes importantes en termes de poids et de volume pour les différents composants.

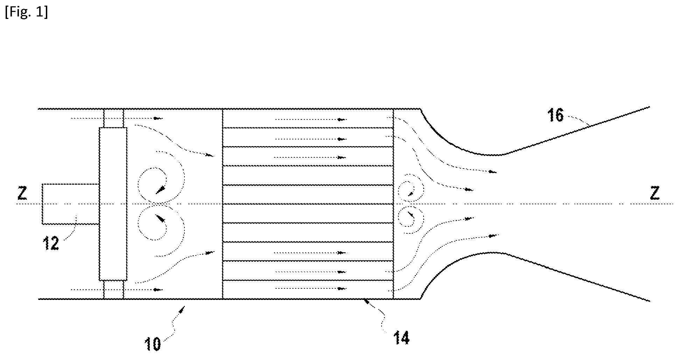

En effet, la présence de poches de recirculation de fluide dans l'écoulement vient perturber l'échange thermique entre le fluide au sein du conduit d'échappement et l'ergol, en neutralisant une partie de la surface d'échange de l'échangeur thermique. Les solutions envisagées à ce jour entrainent une augmentation significative de la longueur du conduit d'échappement et/ou de sa masse, ce qui n'est pas acceptable dans le cadre d'un lanceur spatial. La figure 1 illustre cette problématique. On représente sur cette figure un conduit d'échappement 10 dans lequel sont successivement positionnés une turbopompe 12, un échangeur thermique 14 et une tuyère 16. On schématise par des flèches l'écoulement de fluide dans le conduit d'échappement. On voit que la recirculation de fluide au niveau de la partie centrale du conduit d'échappement entraine que seuls les éléments périphériques de l'échangeur thermique vont pouvoir être exploités, les éléments centraux de l'échangeur thermique ayant une efficacité moindre voire nulle.

Les solutions consistant à augmenter l'écart entre la turbopompe 12 et l'échangeur thermique 14 afin d'atténuer les courants de recirculation, ou à augmenter la longueur de l'échangeur thermique 14 afin d'augmenter la surface d'échange au niveau des régions périphériques ne peuvent être retenues en raison de l'augmentation importante de volume et de masse qu'elles impliquent.

### Exposé de l'invention

Le présent exposé vise ainsi à répondre au moins partiellement à ces problématiques, et propose un lanceur spatial comprenant une turbopompe, une tuyère d'échappement positionnée en aval de la turbopompe, et un échangeur thermique, la turbopompe, l'échangeur thermique et la tuyère d'échappement étant agencés dans un conduit d'échappement de fluide, de l'amont vers l'aval selon un sens d'écoulement de fluide dans ledit conduit d'échappement, l'échangeur thermique étant configuré de manière à réaliser un transfert de chaleur entre un ergol circulant au sein de l'échangeur thermique et le fluide s'écoulant dans le conduit d'échappement, caractérisé en ce qu'il comprend un culot positionné dans le conduit d'échappement entre la turbopompe et l'échangeur thermique, le culot étant positionné au centre de l'écoulement de fluide, et comprenant des orifices d'aspiration réalisés dans une paroi du culot configurés de manière à aspirer une partie d'un écoulement de fluide autour du culot, typiquement tout ou partie de la couche limite de l'écoulement de fluide autour du culot.

Selon un exemple, la turbopompe est positionnée dans une zone centrale du conduit d'échappement, et définit des passages périphériques de fluide, le culot comprend un corps positionné dans le prolongement de la turbopompe, de sorte que le fluide dans le conduit d'échappement s'écoule autour du culot, le culot présente une section décroissante de l'amont vers l'aval.

Selon un exemple, le culot comprend une unité d'aspiration couplée aux orifices d'aspiration, l'unité d'aspiration étant configurée de manière à sélectivement appliquer une dépression dans un volume interne du culot de manière à aspirer une partie de l'écoulement de fluide du conduit d'échappement vers un volume interne du culot.

Le lanceur comprend alors typiquement un contrôleur adapté pour piloter l'unité d'aspiration en fonction d'une consigne de débit de fluide.

Selon un exemple, le culot comprend un segment reliant un volume interne du corps du culot à une zone du conduit d'échappement située en aval de l'échangeur thermique.

Le segment est alors typiquement relié au volume interne du corps du culot via un obturateur, configurée pour réguler le débit de fluide pouvant circuler entre le volume interne du corps du culot et le segment.

Le segment présente typiquement une restriction positionnée à une extrémité distale du segment, en aval de l'échangeur thermique.

Le segment est typiquement associé à l'échangeur thermique de manière à permettre un transfert de chaleur entre le fluide traversant le segment et l'ergol circulant au sein de l'échangeur thermique.

Le segment s'étend typiquement selon un axe de rotation de la turbopompe.

### Brève description des dessins

L'invention et ses avantages seront mieux compris à la lecture de la description détaillée faite ci-après de différents modes de réalisation de l'invention donnés à titre d'exemples non limitatifs.
[Fig. 1] La figure 1 déjà décrite précédemment représente un exemple de conduit d'échappement de lanceur spatial.
[Fig. 2] La figure 2 représente un exemple de système selon un aspect de l'invention selon une première configuration.
[Fig. 3] La figure 3 représente un exemple de système selon un aspect de l'invention selon une deuxième configuration.

Sur l'ensemble des figures, les éléments en commun sont repérés par des références numériques identiques.

### Description des modes de réalisation

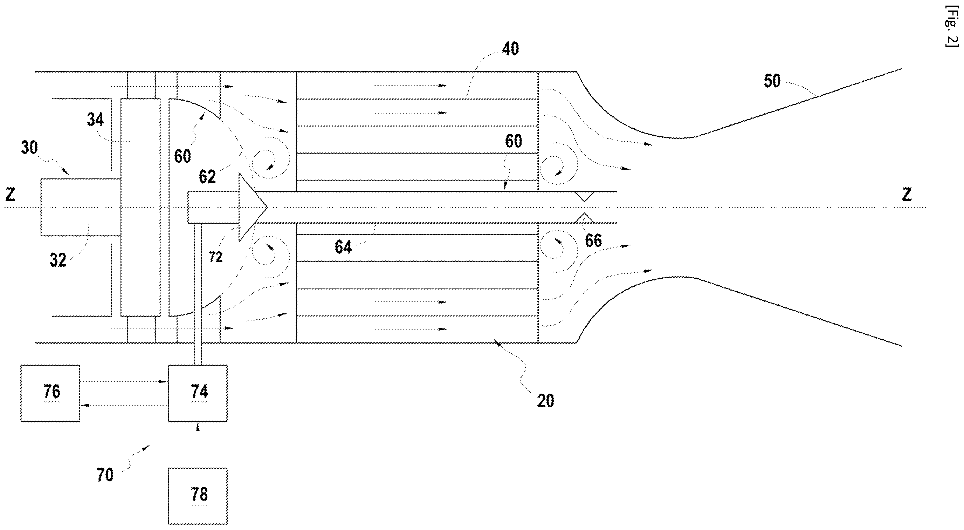

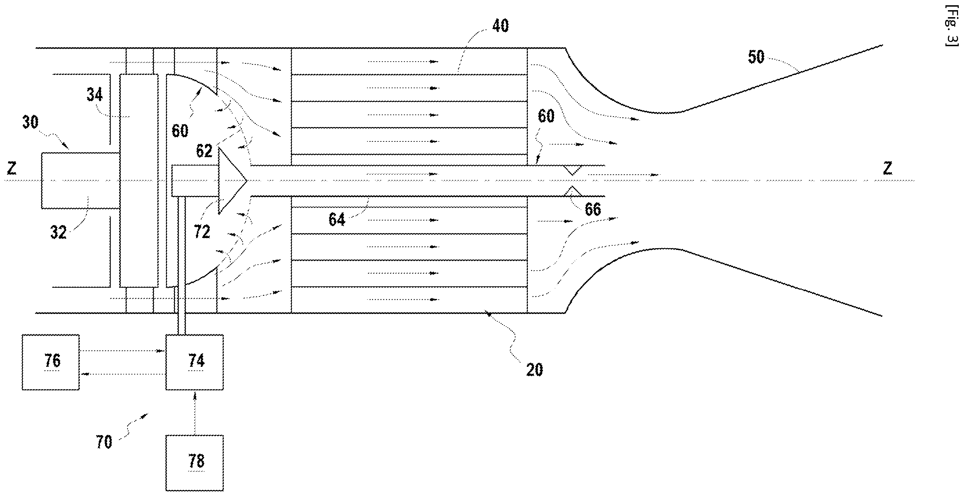

Les figures 2 et 3 représentent un exemple de système selon un aspect de l'invention selon deux configurations que l'on décrit ci-après.

On représente sur ces figures un conduit d'échappement 20 d'un lanceur spatial dans lequel sont successivement positionnés un disque d'une turbine alimentant une turbopompe 30, un échangeur thermique 40 entre le gaz chauds et l'ergol qui doit être vaporisé et une tuyère de l'échappement 50, ces éléments étant positionnés de l'amont vers l'aval selon un sens d'écoulement majoritaire de fluide dans le conduit d'échappement 20. Par sens d'écoulement majoritaire, on entend le sens d'écoulement souhaité pour le fluide dans le conduit d'échappement 20, sans prendre en considération les éventuelles turbulences ou recirculations de fluide dans le conduit d'échappement 20.

La turbopompe 30 présente typiquement un arbre 32 et une turbine 34 montés mobiles en rotation selon un axe principal Z-Z par rapport à une structure fixe du lanceur. La structure d'une turbopompe 30 est bien connue, et ne sera pas décrite plus en détail ici. La turbopompe 30 est positionnée au centre du conduit d'échappement 20 ; le fluide s'écoule donc dans le conduit d'échappement 20 autour de la turbopompe 30.

L'échangeur thermique 40 comprend typiquement une pluralité de tubes de circulation d'un ergol, les tubes s'étendant typiquement selon le sens d'écoulement du fluide dans le conduit d'échappement 20. L'échangeur thermique 40 assure un échange de chaleur entre un fluide chaud présent dans le conduit d'échappement 20 avec un ergol circulant dans les tubes de l'échangeur thermique 40, de manière à vaporiser cet ergol ou plus généralement de manière à transférer de la chaleur depuis le fluide présent dans le conduit d'échappement 20 vers l'ergol circulant dans l'échangeur thermique 40.

La tuyère 50 forme l'échappement du conduit d'échappement 20 vers le milieu extérieur, typiquement l'atmosphère ou l'espace.

Afin de répondre aux problématiques déjà détaillées précédemment en référence à la figure 1, le système proposé comprend un culot 60 interposé entre la turbopompe 30 et l'échangeur thermique 40.

Le culot 60 s'étend typiquement dans le prolongement de la turbopompe 30, de sorte que le fluide s'écoulant dans le conduit d'échappement 20 s'écoule autour du culot 60. Dans l'exemple illustré, le culot 60 comprend un corps 62 qui présente une forme générale hémisphérique ou de sphère tronquée, étant entendu qu'une telle forme n'est pas limitative ; le corps 62 du culot 62 peut par exemple présenter une forme d'ellipse ou ellipsoïde, de cône ou de tronc de cône, ou plus généralement toute forme adaptée.

Le culot 60 est typiquement un élément creux, présentant une pluralité d'orifices d'aspiration reliant un volume interne du culot 60, et notamment un volume interne du corps 62 du culot 60, à un volume externe au culot 60. Ces orifices d'aspiration relient ainsi le volume interne du culot 60 au volume interne du conduit d'échappement 20 dans lequel s'écoule le fluide.

Le culot 60 comprend une unité d'aspiration couplée aux orifices d'aspiration, l'unité d'aspiration étant configurée de manière à sélectivement appliquer une dépression dans un volume interne du culot 60 de manière à aspirer une partie de l'écoulement de fluide du conduit d'échappement 20 vers un volume interne du culot 60. L'unité d'aspiration peut être une unité présentant un fonctionnement de type actif, par exemple une pompe générant une dépression ou un phénomène d'aspiration, ou de type passif, par exemple une liaison entre le volume interne du culot 60 et une région présentant une pression plus faible que la pression au sein du conduit d'échappement 20 lorsque le lanceur est en fonctionnement.

Dans l'exemple illustré, le culot 60 comprend un segment 64 relié au corps 62 du culot 60. Le segment 64 est typiquement un tube qui présente une extrémité proximale qui débouche dans le volume interne du corps 62 du culot 60, et une extrémité distale qui débouche dans le conduit d'échappement 20, en aval de l'échangeur thermique 40. Dans l'exemple illustré, le segment 64 s'étend selon l'axe principal Z-Z ou sensiblement selon l'axe principal Z-Z.

De manière optionnelle, le segment 64 comprend une restriction 66 positionnée à proximité de son extrémité distale, la restriction 66 réalisant un effet venturi au sein du segment 64 et permettant ainsi de calibrer le débit traversant le segment 64, ce débit qui est établi par la différence de pression entre le volume interne du culot 60 et l'écoulement de fluide dans le conduit d'échappement 20.

En reliant de la sorte le volume interne du corps 62 du culot 60 à une région en aval de l'échangeur thermique 40, on génère un effet d'aspiration via les orifices d'aspiration du culot 60, dans la mesure où la pression autour du culot 60 dans le conduit d'échappement 20 est plus élevée que la pression dans ladite région en aval de l'échangeur thermique 40. Un tel gradient de pression génère ainsi un effet d'aspiration.

Le culot 60 va ainsi permettre d'aspirer une partie du fluide s'écoulant dans le conduit d'échappement 20, et de le rejeter en aval de l'échangeur thermique 40. En fonctionnement, le culot 60 va aspirer tout ou partie d'une couche limite de l'écoulement de fluide dans le conduit d'échappement 20. Une telle aspiration de tout ou partie de la couche limite permet de supprimer ou de limiter le décollement de l'écoulement de la paroi externe du culot 60, et ainsi d'éviter la formation de courants de recirculation en amont de l'échangeur thermique 40.

En procédant de la sorte, le culot 60 tel que proposé permet que le flux au sein du conduit d'échappement 20 soit guidé vers le centre du conduit d'échappement 20, et ainsi que l'ensemble de la surface de l'échangeur thermique 40 soit exploitée, par opposition à la configuration illustrée sur la figure 1 décrite précédemment dans laquelle seule les régions périphériques de l'échangeur thermique 40 sont exploitées.

Les flèches sur les figures 2 et 3 symbolisent l'écoulement de fluide au sein du conduit d'échappement 20 et représentent schématiquement l'effet du culot 60 tel que proposé. La figure 2 illustre schématiquement l'écoulement de fluide autour du culot 60 en l'absence d'aspiration de la couche limite, et la figure 3 illustre schématiquement l'écoulement de fluide autour du culot 60 avec une aspiration de la couche limite de l'écoulement de fluide.

On voit sur ces figures que l'aspiration de la couche limite permet d'obtenir une répartition de du fluide en amont de l'échangeur thermique 40 répartie sur l'ensemble de la section du conduit d'échappement 20, et non pas uniquement sur sa périphérie du fait de la présence de courants de recirculation dans la zone centrale du conduit d'échappement 20.

Le système proposé permet ainsi de s'affranchir des problématiques énoncées précédemment, en optimisant l'effet de l'échangeur thermique 40 et ainsi en ne nécessitant pas d'augmenter la longueur des tubes de l'échangeur thermique 40 ou d'augmenter l'écart entre la turbopompe 30 et l'échangeur thermique 40 de manière importante. Une telle solution n'a jamais été proposée ou envisagée pour un lanceur spatial.

De manière optionnelle, l'effet d'aspiration peut être piloté. Dans l'exemple illustré sur les figures 2 et 3, le culot 60 comprend un contrôleur 70 adapté pour sélectivement ouvrir ou obturer totalement ou partiellement le passage de fluide entre le corps 62 et le segment 64 du culot 60. La figure 2 illustre une configuration dans laquelle le passage de fluide entre le corps 62 et le segment 64 du culot 60 est obturé, tandis que la figure 3 illustre une configuration dans laquelle le passage de fluide entre le corps 62 et le segment 64 du culot 60 est possible.

Le contrôleur 70 tel que représenté comprend un obturateur 72 piloté par un actionneur 74 associé à une unité de commande 76 et à une source d'énergie 78.

Le contrôleur 70 peut ainsi piloter l'effet d'aspiration en fonction des paramètres de fonctionnement, par exemple en fonction de la quantité de chaleur nécessaire pour vaporiser l'ergol circulant dans l'échangeur thermique 40. Ainsi, le contrôleur permet de sélectionner la surface d'échange de l'échangeur thermique 40 en fonction du besoin de pressurisation : quand un fort débit est demandé l'aspiration est activée et l'intégralité des canaux de l'échangeur thermique 40 sont alimentés (la surface d'échange devient la surface maximale), et quand une réduction de l'appel de débit est imposée afin d'assurer une température des gaz de pressurisation constante (dans les limites fonctionnelles imposées par la tenue structurale des réservoirs du lanceur et des composants du système de pressurisation) l'aspiration de la couche limite est stoppée ou limitée, de manière à modifier les conditions d'alimentation de l'échangeur thermique 40 en réduisant la surface d'échange à une valeur minimale ou intermédiaire.

Afin d'optimiser le rendement, le segment 64 peut être intégré à l'échangeur thermique 40, de sorte que le fluide qui est aspiré par les orifices d'aspiration du culot 60 et qui est rejeté en aval de l'échangeur thermique 40 contribue à l'échange de chaleur avec l'ergol circulant dans les tubes de l'échangeur thermique 40. Le segment 64 peut par exemple être au moins partiellement réalisé entre des tubes de l'échangeur thermique 40, tout ou partie du segment 64 étant formé par des parois des tubes de l'échangeur thermique 40.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

Il est également évident que toutes les caractéristiques décrites en référence à un procédé sont transposables, seules ou en combinaison, à un dispositif, et inversement, toutes les caractéristiques décrites en référence à un dispositif sont transposables, seules ou en combinaison, à un procédé.

## Revendications

1. Lanceur spatial comprenant une turbopompe (30), une tuyère (50) d'échappement positionnée en aval de la turbopompe (30), et un échangeur thermique (40),
la turbopompe (30), l'échangeur thermique (40) et la tuyère (50) d'échappement étant agencés dans un conduit d'échappement (20) de fluide, de l'amont vers l'aval selon un sens d'écoulement de fluide dans ledit conduit d'échappement (20), l'échangeur thermique (40) étant configuré de manière à réaliser un transfert de chaleur entre un ergol circulant au sein de l'échangeur thermique (40) et le fluide s'écoulant dans le conduit d'échappement (20),
**caractérisé en ce qu'**il comprend
un culot (60) positionné dans le conduit d'échappement (20) entre la turbopompe (30) et l'échangeur thermique (40), le culot (60) étant positionné au centre de l'écoulement de fluide, et comprenant des orifices d'aspiration réalisés dans une paroi du culot (60) configurés de manière à aspirer une partie d'un écoulement de fluide autour du culot (40).

2. Lanceur selon la revendication 1, dans lequel
la turbopompe (30) est positionnée dans une zone centrale du conduit d'échappement (20), et définit des passages périphériques de fluide,
le culot (60) comprend un corps (62) positionné dans le prolongement de la turbopompe (30), de sorte que le fluide dans le conduit d'échappement (20) s'écoule autour du culot (60),
le culot (60) présente une section décroissante de l'amont vers l'aval.

3. Lanceur selon l'une des revendications 1 ou 2, dans lequel le culot (60) comprend une unité d'aspiration couplée aux orifices d'aspiration, l'unité d'aspiration étant configurée de manière à sélectivement appliquer une dépression dans un volume interne du culot (60) de manière à aspirer une partie de l'écoulement de fluide du conduit d'échappement (20) vers un volume interne du culot (60).

4. Lanceur selon la revendication 3, comprenant un contrôleur (70) adapté pour piloter l'unité d'aspiration en fonction d'une consigne de débit de fluide.

5. Lanceur selon l'une des revendications 1 à 4, dans lequel le culot (60) comprend un segment (64) reliant un volume interne du corps (62) du culot (60) à une zone du conduit d'échappement (20) située en aval de l'échangeur thermique (40).

6. Lanceur selon la revendication 5, dans lequel le segment (64) est relié au volume interne du corps (62) du culot (60) via un obturateur (72), configurée pour réguler le débit de fluide pouvant circuler entre le volume interne du corps (62) du culot (60) et le segment (64).

7. Lanceur selon l'une des revendications 5 ou 6, dans lequel le segment (64) présente une restriction (66) positionnée à une extrémité distale du segment (64), en aval de l'échangeur thermique (40).

8. Lanceur selon l'une des revendications 5 à 7, dans lequel le segment (64) est associé à l'échangeur thermique (40) de manière à permettre un transfert de chaleur entre le fluide traversant le segment (64) et l'ergol circulant au sein de l'échangeur thermique (40).

9. Lanceur selon l'une des revendications 5 à 8, dans lequel le segment (64) s'étend selon un axe de rotation (Z-Z) de la turbopompe (30).

## Patentansprüche

1. Trägerrakete, umfassend eine Turbopumpe (30), eine Austrittsdüse (50), die stromabwärts von der Turbopumpe (30) positioniert ist, und einen Wärmetauscher (40),
wobei die Turbopumpe (30), der Wärmetauscher (40) und die Austrittsdüse (50) in einer Fluidauslassleitung (20) von stromaufwärts nach stromabwärts in einer Fluidströmungsrichtung in der Auslassleitung (20) angeordnet sind, wobei der Wärmetauscher (40) dazu ausgestaltet ist, eine Wärmeübertragung zwischen einem Treibmittel, das innerhalb des Wärmetauschers (40) zirkuliert, und dem Fluid, das in der Auslassleitung (20) strömt, umzusetzen,
**dadurch gekennzeichnet, dass** sie umfasst:
einen Sockel (60), der in der Auslassleitung (20) zwischen der Turbopumpe (30) und dem Wärmetauscher (40) positioniert ist, wobei der Sockel (60) in der Mitte der Fluidströmung positioniert ist und Ansaugöffnungen umfasst, die in einer Wand des Sockels (60) umgesetzt sind, die dazu ausgestaltet sind, einen Teil einer Fluidströmung um den Sockel (40) herum anzusaugen.

2. Rakete nach Anspruch 1, wobei die Turbopumpe (30) in einem zentralen Bereich der Auslassleitung (20) positioniert ist und periphere Fluidkanäle definiert, wobei der Sockel (60) einen Körper (62) umfasst, der in der Verlängerung der Turbopumpe (30) positioniert ist, sodass das Fluid in der Auslassleitung (20) um den Sockel (60) herum strömt,
wobei der Sockel (60) einen Abschnitt aufweist, der von stromaufwärts nach stromabwärts abnimmt.

3. Rakete nach einem der Ansprüche 1 oder 2, wobei der Sockel (60) eine Ansaugeinheit umfasst, die an die Ansaugöffnungen gekoppelt ist, wobei die Ansaugeinheit dazu ausgestaltet ist, selektiv einen Unterdruck in einem Innenvolumen des Sockels (60) anzulegen, um einen Teil der Fluidströmung von der Auslassleitung (20) zu einem Innenvolumen des Sockels (60) anzusaugen.

4. Rakete nach Anspruch 3, umfassend eine Steuerung (70), die dazu ausgelegt ist, die Ansaugeinheit in Abhängigkeit von einem Sollwert des Fluidflusses zu steuern.

5. Rakete nach einem der Ansprüche 1 bis 4, wobei der Sockel (60) ein Segment (64) umfasst, das ein Innenvolumen des Körpers (62) des Sockels (60) mit einem Bereich der Auslassleitung (20) verbindet, der sich stromabwärts des Wärmetauschers (40) befindet.

6. Rakete nach Anspruch 5, wobei das Segment (64) mit dem Innenvolumen des Körpers (62) des Sockels (60) über einen Verschluss (72) verbunden ist, der dazu ausgestaltet ist, den Fluidfluss zu regeln, der zwischen dem Innenvolumen des Körpers (62) des Sockels (60) und dem Segment (64) zirkulieren kann.

7. Rakete nach einem der Ansprüche 5 oder 6, wobei das Segment (64) eine Verengung (66) aufweist, die an einem distalen Ende des Segments (64) stromabwärts des Wärmetauschers (40) positioniert ist.

8. Rakete nach einem der Ansprüche 5 bis 7, wobei das Segment (64) mit dem Wärmetauscher (40) derart verbunden ist, dass eine Wärmeübertragung zwischen dem Fluid, welches das Segment (64) durchläuft, und dem Treibmittel, das in dem Wärmetauscher (40) zirkuliert, ermöglicht wird.

9. Rakete nach einem der Ansprüche 5 bis 8, wobei sich das Segment (64) entlang einer Drehachse (Z-Z) der Turbopumpe (30) erstreckt.

## Claims

1. A space launcher comprising a turbopump (30), an exhaust nozzle (50) positioned downstream of the turbopump (30), and a heat exchanger (40),
the turbopump (30), the heat exchanger (40) and the exhaust nozzle (50) being arranged in a fluid exhaust duct (20), from upstream to downstream along a direction of fluid flow in said exhaust duct (20), the heat exchanger (40) being configured so as to transfer heat between a propellant circulating within the heat exchanger (40) and the fluid flowing in the exhaust duct (20),
**characterized in that** it comprises:
a base (60) positioned in the exhaust duct (20) between the turbopump (30) and the heat exchanger (40), the base (60) being positioned at the center of the fluid flow, and comprising suction orifices made in a wall of the base (60) configured to suction part of a fluid flow around the base (40).

2. The launcher according to claim 1, wherein the turbopump (30) is positioned in a central area of the exhaust duct (20), and defines peripheral fluid passages,
the base (60) comprises a body (62) positioned in the extension of the turbopump (30), so that the fluid in the exhaust duct (20) flows around the base (60).
the base (60) has a decreasing section from upstream to downstream.

3. The launcher according to any of claims 1 or 2, wherein the base (60) comprises a suction unit coupled to the suction orifices, the suction unit being configured to selectively apply vacuum in an internal volume of the base (60) so as to suction part of the fluid flow from the exhaust conduit (20) towards an internal volume of the base (60).

4. The launcher according to claim 3, comprising a controller (70) adapted to drive the suction unit based on a fluid flow rate setpoint.

5. The launcher according to any of claims 1 to 4, wherein the base (60) comprises a segment (64) connecting an internal volume of the body (62) of the base (60) to an area of the exhaust duct (20) located downstream of the heat exchanger (40).

6. The launcher according to claim 5, wherein the segment (64) is connected to the internal volume of the body (62) of the base (60) via a shutter (72), configured to regulate the fluid flow rate which can circulate between the internal volume of the body (62) of the base (60) and the segment (64).

7. The launcher according to any of claims 5 or 6, wherein the segment (64) has a restriction (66) positioned at a distal end of the segment (64), downstream of the heat exchanger (40).

8. The launcher according to any of claims 5 to 7, wherein the segment (64) is associated with the heat exchanger (40) so as to allow heat transfer between the fluid passing through the segment (64) and the propellant circulating within the heat exchanger (40).

9. The launcher according to any of claims 5 to 8, wherein the segment (64) extends along an axis of rotation (Z-Z) of the turbopump (30).
